# EUROPÄISCHE PATENTANMELDUNG

(11) **EP 3 715 540 A1**
(43) Veröffentlichungstag der Anmeldung: **30.09.2020**
(21) Anmeldenummer: 19203240.7
(22) Anmeldetag: 15.10.2019
(51) Int. Cl.: E03C 1/044, F16K 11/00, F16K 27/04, E03C 1/04

(54) **WASSERHAHN MIT MISCHBATTERIE ZUR VERWENDUNG ALS HOCHDRUCK- ODER NIEDERDRUCKARMATUR**

(30) Priorität: 28.03.2019 DE 202019001454 U
(71) Anmelder: Al Mstrehi, Rafat, 48565 Steinfurt (DE)
(72) Erfinder: Al Mstrehi, Rafat, 48565 Steinfurt (DE)
(74) Vertreter: Pelster, Arno

(57) **Zusammenfassung**

Die Erfindung betrifft einen Wasserhahn mit Mischbatterie, der für die Verwendung als Hochdruck- und Niederdruckarmatur geeignet ist, umfassend: einen Wasserauslauf (22), einen Batteriekörper (1), und eine Mischkartusche (2) mit einem Stellhebel, wobei der Wasserauslauf (22) am Batteriekörper (1) angeordnet ist, wobei der Batteriekörper (1) einen Aufnahmeraum (28) für die Aufnahme der Mischkartusche (2) aufweist, wobei der Boden des Aufnahmeraums ein erstes (13), ein zweites (15) und ein drittes Loch (17) umfasst, die sich als Kanäle durch den Batteriekörper (1) erstrecken und dazu geeignet sind, an der vom Aufnahmeraum abgewandten Außenseite des Batteriekörpers an einem zugehörigen ersten (14), zweiten (16) und dritten Anschluss (18) mit Wasserleitungen verbunden zu werden.

## Beschreibung

Die vorliegende Erfindung betrifft einen Wasserhahn mit Mischbatterie, geeignet für die Verwendung als Hochdruck- und Niederdruckarmatur. Offenbart werden zudem Herstellungs- und Umbauverfahren für entsprechende Wasserhähne.

Wasserhähne sind aus dem Alltag bekannt. Herkömmliche Wasserhähne verfügen zur Dosierung des Wasserstroms und zur Einstellung der Wassertemperatur über eine sogenannte Mischbatterie, die auch als Mischarmatur bezeichnet wird. In entsprechenden Wasserhähnen wird durch die Mischbatterie durch Dosieren und Vermischen von kaltem und warmen Wasser die vom Benutzer gewünschte Temperatur eingestellt.

Der Fachmann unterscheidet zwischen Hochdruck- und Niederdruckarmaturen, d.h. zwischen Wasserhähnen mit Mischbatterien, die für den Einsatz in verschiedenen Anschlusssituationen geeignet sind. Hochdruckarmaturen werden üblicherweise bei direktem Anschluss der Armatur an Warmwassernetze, Durchlauferhitzer oder Druckboiler eingesetzt, bei denen das Warmwasser unter vollem Wasserleitungsdruck steht. Diese Armaturen sind dadurch gekennzeichnet, dass sie lediglich über zwei Anschlüsse verfügen, einen Kaltwasseranschluss und einen Warmwasseranschluss. Die Kalt- und Warmwasserströme werden im inneren der Mischbatterie durch eine sogenannte Mischkartusche vermischt und über einen gemeinsamen Auslass abgeführt.

Im Gegensatz hierzu haben Niederdruckarmaturen, die zum Einsatz mit einem drucklosen Boiler geeignet sind, drei Anschlussleitungen. Neben dem Kaltwasserzulauf verfügt der Wasserhahn über einen Kaltwasserablauf, über den das Kaltwasser aus dem Wasserhahn zum Boiler geführt wird sowie über einen Warmwassereinlass, über den das vom Boiler erwärmte Wasser durch den Wasserhahn zum Auslass geführt wird.

Das Grundprinzip eines Wasserhahns mit Mischbatterie ist im Stand der Technik bekannt. Entsprechende Mischbatterien sind beispielsweise in der DE 10057591 C1, der DE 102005061032 A1 oder der DE 19507195 A1 offenbart.

Bei den zuvor angesprochenen Mischkartuschen, die im Inneren der Mischbatterie die tatsächliche Vermischung der Wasserströme vornehmen, handelt es sich um etablierte Bauteile, die bereits in den 1940er Jahren entwickelt wurde. In solchen Mischkartuschen befinden sich zwei plan geschliffene Keramikscheiben, die gegeneinander verschoben und verdreht werden können. Die feststehende, untenliegende Keramikplatte in der Mischkartusche besitzt drei Öffnungen. Darüber liegt eine drehbar und hochschwenkbar angeordnete zweite Keramikplatte, in die eine einzelne Vertiefung eingearbeitet ist. Durch Betätigung des Stellhebels der Mischkartusche wird die Lage des Loches in der beweglichen Keramikplatte relativ zu der feststehenden Keramikplatte verändert, und dadurch eine Verbindung zwischen den unterliegenden Öffnungen erzeugt, durch die die Wasserströme fließen können. Entsprechende Mischkartuschen, die auch als Mischeinheiten oder Steuerzylinder bezeichnet werden, sind beispielsweise in der DE 102004035644 B4 und der DE 112017000317 T5 sowie der US 5853023 und der US 5375624 offenbart.

Es ist für den Fachmann selbstverständlich, dass die aus dem Stand der Technik bekannten Hochdruck- und Niederdruckarmaturen keinesfalls für den jeweils anderen Zweck eingesetzt werden können. Dies bedeutet, dass eine Hochdruckarmatur nicht mit einem drucklosen Boiler verwendet werden kann, wohingegen eine Niederdruckarmatur nicht mit solchen Einrichtungen kompatibel ist, in denen das Warmwasser unter vollen Wasserleitungsdruck steht. Diese unbestrittene Inkompatibilität ergibt sich direkt aus der vorstehend beschriebenen Wirkfunktion und Konstruktionsweise von Hoch- und Niederdruckarmaturen.

Der Einsatz eines drucklosen Boilers erfordert es zwangsläufig, dass der Wasserhahn über drei Anschlüsse verfügt, sodass die mit lediglich zwei Anschlüssen ausgestattete Hochdruckarmatur nicht einmal angeschlossen werden kann. Anders herum besteht keine Möglichkeit, eine Niederdruckarmatur sinnvoll an eine Hochdruckleitung anzuschließen. Wird die Kaltwasserleitung an den dafür im Niederdruckbetrieb vorgesehenen Anschluss angeschlossen, wird bei jeder Stellung der Mischbatterie, die zumindest einen kleinen Teil Warmwasser umfasst, Kaltwasser aus dem Loch strömen, welches eigentlich für den Zulauf zum drucklosen Boilers vorgesehen ist. Eine bloße mechanische Versiegelung dieses Anschlusses ist dabei keine Option, da dadurch ein Reservoir für abgestandenes Wasser entstehen würde, welches nicht vom Kaltwasserstrom durchflossen ist.

Gleichzeitig würde ein direkter Anschluss einer unter Druck stehenden Warmwasserleitung an den Warmwassereingang einer Niederdruckarmatur zu einem nicht dosierbaren Auslauf an warmen Wasser führen, da die Warmwassermenge zwischen diesem Anschluss und dem Auslauf nicht mehr gedrosselt wird, sondern bei Betrieb eines drucklosen Boilers über die Kaltwasserzufuhr reguliert wird.

Eine einfache Überlegung zeigt, dass natürlich auch der Anschluss des unter Druck stehenden Warmwassers an dem Zulauf zum drucklosen Boiler und der Verschluss des ursprünglichen Warmwasserzulaufs nicht in einer funktionierenden Mischbatterie resultieren kann, da jede Einstellung von Warmwasser in einer entsprechen geschalteten Niederdruckarmatur gleichzeitig das Warm- und Kaltwasser öffnen würde.

Wegen dieser Problematik werden Niederdruckarmaturen regelmäßig mit einem besonderen Warnhinweis auf der Verpackung versehen. Der Anschluss einer falschen Armatur, gerade wenn dieser nicht durch Fachleute erfolgt, ist regelmäßig mit erheblichen Sachschäden verbunden, insbesondere mit Wasserschäden oder Beschädigungen am Boiler.

Auch wenn Hochdruckarmaturen heutzutage, gerade in westlichen Industrienationen, mehr und mehr auf dem Vormarsch sind, haben Niederdruckarmaturen weiterhin einen wesentlichen Anteil an den zum Einsatz kommenden Anlagen.

Die Möglichkeit einen drucklosen Boiler einzusetzen, ermöglicht dabei den Einsatz von Warm- und Kaltwassermischbatterien auch in solchen Bereichen, in denen eine unter Druck stehende Warmwasserleitung nicht zur Verfügung steht. Dies ist nicht nur im Bereich der Alt- und Umbauten sowie der mobilen Anwendungen regelmäßig relevant, sondern insbesondere in Entwicklungs- und Schwellenländern in einigen Fällen noch die überwiegende Lösung zur Warmwasserversorgung oder zumindest eine Übergangstechnologie.

Moderne Wasserhähne und Mischbatterien sind regelmäßig hochwertige Produkte, deren ausgefeilte Technik und deren ansprechendes Design regelmäßig in hohen Anschaffungskosten resultieren. Diese Wasserhähne werden dabei insbesondere optisch auf die restlichen Bestandteile der Einrichtung, beispielsweise der Küche oder des Badezimmers, abgestimmt. Dem Fachmann ist klar, dass durch die Inkompatibilität zwischen Hochdruck- und Niederdruckarmaturen jährlich ein erheblicher wirtschaftlicher Schaden entsteht, da bereits angeschaffte Armaturen -bedingt durch einen Wechsel der Anschlussumstände- nicht weiterverwendet werden können.

Beispielsweise kann es bei einem Umzug dazu kommen, dass die bislang in der Küche eingesetzte Armatur mit dem Anschluss im neuen Objekt nicht mehr kompatibel ist. Der Wiederverkaufswert gebrauchter Wasserhähne, deren Optik auch noch meist auf eine spezifische Küchen- oder Badeinrichtung abgestimmt ist, ist regelmäßig niedrig, wohingegen die Anschaffungskosten eines neuen Wasserhahns, der wiederum auf das gewünschte Design passt, erheblich sein können. Insbesondere durch die geringe Möglichkeit zum Weiterverkauf entstehen durch die vorstehend beschriebene Problematik somit nicht nur hohe Kosten, sondern auch ein erheblicher Aufwand. Es wird zudem durch den nicht mehr benötigten Wasserhahn Abfall generiert, den der Fachmann, gerade in Zeiten knapper werdender Ressourcen und eines höheren Umweltbewusstseins unter den Verbrauchern, gerne vermeiden würde.

Über das Unbrauchbarwerden eines bereits angeschafften Wasserhahns hinaus hat sich in der Praxis gezeigt, dass viele Fachgeschäfte und Versandhändler hohe Retourenquoten im Bereich der Wasserhähne verzeichnen, da Laien in Unkenntnis der Problematik den falschen Wasserhahn erwerben. Je nach Ausmaß der fehlerhaften, unfachmännischen Installation ist der Weiterverkaufswert entsprechender Retouren regelmäßig erheblich reduziert, so dass nicht nur dem Kunden überflüssige Mühen entstehen, sondern auch dem Fachhandel ein spürbarer Schaden.

Weiterhin ist problematisch, dass auch Fachleute regelmäßig verschiedene Wasserhahnvarianten vorhalten müssen, beispielsweise beim Einsatz im Sanitärnotdienst, um den Anforderungen der verschiedenen Systeme gerecht werden zu können, was regelmäßig als nachteilig empfunden wird. Zudem wird es regelmäßig als nachteilig empfunden, dass Hersteller herkömmlicher Wasserhähne ihre Produkte in zwei verschiedenen Varianten fertigen müssen, was mit Mehraufwand und -kosten verbunden ist.

In der Fachwelt besteht im Lichte der vorstehenden Problematik seit langem das Bedürfnis, einen Wasserhahn mit Mischbatterie anzugeben, der sowohl als Hochdruck- als auch als Niederdruckarmatur eingesetzt werden kann. Die vorliegende Erfindung basiert deshalb auf der primären Aufgabe, die vorstehend beschriebenen Nachteile des Standes der Technik zu beseitigen oder zumindest zu verringern. Demnach liegt der vorliegenden Erfindung insbesondere die Aufgabe zugrunde, einen Wasserhahn anzugeben, der als Hochdruck- und Niederdruckarmatur gleichermaßen eingesetzt werden kann, und dadurch die vorstehend beschriebenen Probleme löst. Dabei war es insbesondere die Aufgabe einen Wasserhahn anzugeben, dessen Aufbau so einfach ist, dass auch ein Laie ihn durch kleine bauliche Veränderungen vom Niederdruckbetrieb auf den Hochdruckbetrieb umstellen kann. Zudem sollte ein entsprechender Wasserhahn vorzugsweise mit im Handel erhältlichen, herkömmlichen Mischkartuschen einsetzbar sein, um eine hohe Verfügbarkeit von Ersatzteilen und eine hohe Kompatibilität mit bestehenden Systemen zu gewährleisten. Der anzugebende Wasserhahn sollte dabei insbesondere keine abgeschlossenen Reservoire ausbilden, in denen sich abgestandenes Wasser sammeln kann. Darüber hinaus war es eine Aufgabe, einen entsprechenden Wasserhahn anzugeben, bei dem der Umbau zwischen den verschiedenen Varianten besonders schnell und effizient erfolgen kann. Wünschenswert wäre es zudem auch, dass der Wasserhahn so ausgebildet ist, dass sich die eingestellte Betriebsart, d.h. als Hochdruck- oder Niederdruckarmatur, leicht und zweifelsfrei erkennen lässt, insbesondere auch während des Betriebes. Zielsetzung war es dabei, dass der anzugebende Wasserhahn leicht und kosteneffizient herzustellen ist, nämlich unter Verwendung lediglich solcher Gerätschaften und Verfahrensschritten, die bereits bei der Fertigung herkömmlicher Wasserhähne verwendet werden. Insbesondere war es ein Ziel der vorliegenden Erfindung, eine Lehre bereitzustellen, mit der auch bestehende Hochdruck- oder Niederdruckarmaturen mit vergleichsweise geringen Aufwand in eine Armatur umgewandelt werden können, die sowohl für den Hochdruck- als auch Niederdruckbetrieb geeignet ist. Von ganz besonderer Bedeutung war es, einen Wasserhahn mit Mischbatterie anzugeben, dessen Größe nicht auf eine Ausführungsform limitiert ist, sondern der eine stufenlose Skalierung des Wasserhahns hinsichtlich der Größe ermöglicht.

Die vorstehend genannten Aufgaben werden durch einen Wasserhahn mit Mischbatterie gelöst, wie er in den Ansprüchen definiert ist. Bevorzugte erfindungsgemäße Ausgestaltungen ergeben sich aus den Unteransprüchen.

Solche Merkmale erfindungsgemäßer Wasserhähne, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Gegenstände.

In den Figuren zeigen:
Fig. 1: Einen beispielhaften erfindungsgemäßen Wasserhahn mit Mischbatterie in einer Explosionsdarstellung.
Fig. 2: Einen vergrößerten Ausschnitt aus dem Wasserhahn mit Mischbatterie der Fig. 1.
Fig. 3: Eine Draufsicht auf die im Boden des Aufnahmeraumes des Batteriekörpers angeordneten Löcher und Ausnehmungen der in Figur 1 und 2 gezeigten Ausführungsform sowie das zur Positionsbeschreibung verwendete Koordinatensystem.
Fig. 4: Eine Draufsicht auf die im Boden des Aufnahmeraumes des Batteriekörpers angeordneten Löcher und Ausnehmungen der in Figur 1 und 2 gezeigten Ausführungsform sowie das zur Positionsbeschreibung verwendete Koordinatensystem, in einer Vergrößerung.
Fig. 5: Eine handelsübliche Mischkartusche mit auf dieser Kartusche angebrachten Positionsmarkierungen in der Seitenansicht.
Fig. 6: Die Mischkartusche der Fig. 5 sowie in der Draufsicht auf die vom Stellhebel abgekehrte Stirnseite der Mischkartusche.
Fig. 7: Einen beispielhaften erfindungsgemäßen Wasserhahn mit Mischbatterie in einer Explosionsdarstellung, wobei der Wasserhahn in der Niederdruckstellung steht.
Fig. 8: Einen beispielhaften erfindungsgemäßen Wasserhahn mit Mischbatterie in einer Explosionsdarstellung, wobei der Wasserhahn in der Hochdruckstellung steht.
Fig. 9: Einen schematische Darstellung des Kaltwasserstroms im Hochdruckbetrieb.
Fig. 10: Einen schematische Darstellung des Heißwasserstroms im Hochdruckbetrieb.
Fig. 11: Einen schematische Darstellung des Mischwasserstroms im Hochdruckbetrieb.
Fig. 12: Einen schematische Darstellung des Kaltwasserstroms im Niederdruckbetrieb.
Fig. 13: Einen schematische Darstellung des Heißwasserstroms im Niederdruckbetrieb.
Fig. 14: Einen schematische Darstellung des Mischwasserstroms im Niederdruckbetrieb.

Die vorliegende Erfindung betrifft insbesondere einen Wasserhahn mit Mischbatterie, geeignet für die Verwendung als Hochdruck- und Niederdruckarmatur, umfassend:
einen Wasserauslauf,
einen Batteriekörper, und
eine Mischkartusche mit einem Stellhebel,
wobei der Wasserauslauf am Batteriekörper angeordnet ist,
wobei der Batteriekörper einen Aufnahmeraum für die Aufnahme der Mischkartusche aufweist, wobei der Boden des Aufnahmeraums ein erstes, ein zweites und ein drittes Loch umfasst, die sich als Kanäle durch den Batteriekörper erstrecken und dazu geeignet sind, an der vom Aufnahmeraum abgewandten Außenseite des Batteriekörpers an einem zugehörigen ersten, zweiten und dritten Anschluss mit Wasserleitungen verbunden zu werden, wobei der mit dem dritten Loch verbundene dritten Kanal über einen Auslass zusätzlich mit dem Wasserauslauf verbunden ist,
wobei die Mischkartusche an der vom Stellhebel abgekehrten Stirnseite eine erste, eine zweite und eine dritte Öffnung aufweist, wobei durch Ausrichtung des Stellhebels eine Verbindung zwischen der ersten und der zweiten Öffnung, zwischen der ersten und der dritten Öffnung sowie zwischen der ersten, der zweiten und der dritten Öffnung hergestellt werden kann,
dadurch gekennzeichnet, dass die Mischkartusche im Aufnahmeraum mittels ein oder mehrerer Fixierelemente
durch Wechselwirkung mit ein oder mehreren erste Fixierstellen in einer ersten Stellung (N) so fixiert werden kann, dass die erste Öffnung nur über dem ersten Loch, die zweite Öffnung nur über dem dritten Loch und die dritte Öffnung nur über dem zweiten Loch liegt,
und
durch Wechselwirkung mit ein oder mehreren zweiten Fixierstellen in einer zweiten Stellung so fixiert werden kann, dass die erste Öffnung nur über dem dritten Loch, die zweite Öffnung nur über dem zweiten Loch und die dritte Öffnung nur über dem ersten Loch liegt.

Der Grundkörper eines Wasserhahns wird regelmäßig als Batteriekörper bezeichnet. Dieser Batteriekörper und seine Ausgestaltungen sind dem Fachmann grundsätzlich geläufig. Der Batteriekörper umfasst beispielsweise Elemente, um den Wasserhahn auf einer Spüle zu montieren, beispielsweise mit einem Gewinde. An dem Batteriekörper ist der Wasserauslauf des Wasserhahns angeordnet, der sich beispielsweise als gerader oder gebogener Hahn vom Batteriekörper erstrecken kann. Der Batteriekörper und der Auslauf können prinzipiell mit herkömmlichen, dem Fachmann bekannten Verfahren aus jedem für die Herstellung von Wasserhähnen prinzipiell geeigneten Materialien hergestellt werden, wobei insbesondere Metalle und Metalllegierungen, insbesondere Eisen, Stahl und Aluminium, besonders geeignet sind.

Der Batteriekörper weist einen Aufnahmeraum auf, dessen Wände und Boden durch den Batteriekörper gebildet werden, und der für die Aufnahme einer Mischkartusche vorgesehen ist.

Mischkartuschen mit einem Stellhebel sind im Stand der Technik beschrieben und im Rahmen der vorliegenden Erfindung können herkömmliche Mischkartuschen verwendet werden, sofern diese an der vom Stellhebel abgekehrten Stirnseite eine erste, eine zweite und eine dritte Öffnung aufweisen, zwischen denen die benötigten Konnektivitäten hergestellt werden können. Der Stellhebel entsprechender Mischkartuschen ist dafür vorgesehen, beispielsweise mit einem Einhandgriff verbunden zu werden und damit dem Verbraucher die Einstellung der Wassertemperatur und des Volumenstroms zu ermöglichen, in dem er die zwei in der Mischkartusche angeordnetes Keramikscheiben gegeneinander verschiebt. Die Mischkartusche ist dabei so ausgebildet, wie sie auch im Stand der Technik regelmäßig eingesetzt wird, nämlich so, dass durch Ausrichtung des Stellhebels eine Verbindung zwischen der ersten und der zweiten Öffnung, zwischen der ersten und der dritten Öffnung sowie zwischen der ersten, der zweiten und der dritten Öffnung, d.h. allen drei Öffnungen gleichzeitig, hergestellt werden kann. Entsprechende Mischkartuschen sind regelmäßig so ausgelegt, dass es nicht möglich ist, eine Verbindung ausschließlich zwischen der zweiten und der dritten Öffnung herzustellen. Die Verbindung der Öffnungen wird, wie vorstehend erläutert, durch das Verschieben der zwei Keramikplatten in der Mischkartusche gegeneinander erreicht und ist durch die Überlagerung der Löcher in den Keramikplatten bedingt.

Der Boden des Aufnahmeraums umfasst ein erstes, ein zweites und ein drittes Loch. Diese Löcher erstrecken sich als Kanäle oder Leitungen durch den unter dem Boden des Aufnahmeraums liegenden Teil des Batteriekörpers und treten auf der vom Aufnahmeraum abgewandten Außenseite des Batteriekörpers aus.

Dabei bilden das erste Loch und der erste Kanal einen zugehörigen ersten Anschluss, das zweite Loch und der zweite Kanal einen zugehörigen zweiten Anschluss und das dritte Loch und der dritte Kanal einen zugehörigen dritten Anschluss. Die Anschlüsse sind dafür vorgesehen mit Wasserleitungen verbunden zu werden. Auch wenn der erste, zweite und dritte Anschluss im einfachsten Fall durch ein Loch gebildet werden, ist es daher bevorzugt, dass der erste, zweite und dritte Anschluss über Mittel zur Befestigung von Wasserleitungen verfügen, beispielsweise Schraubgewinde.

Der mit dem dritten Loch verbundene Kanal, d.h. der dritte Kanal, der auch mit dem dritten Anschluss verbunden ist, umfasst zudem einen Auslass, über den der dritte Kanal zusätzlich mit dem Wasserauslauf verbunden ist. Dieser Auslass liegt regelmäßig im Inneren des Batteriekörpers zwischen dem dritten Loch und dem dritten Anschluss und erstreckt sich durch den Batteriekörper hindurch in Richtung des Wasserauslaufs. Der Fachmann versteht, dass bei dem erfindungsgemäßen Wasserhahn sämtliche aus dem Wasserhahn austretende Flüssigkeit über den dritten Kanal und den Auslass im dritten Kanal zu dem Wasserauslauf gelangen, unabhängig von der eingestellten Temperatur oder des eingestellten Betriebs.

Der Wasserhahn kann über die vorstehend angegebenen Bestandteile hinaus auch weitere Bestandteile umfassen, insbesondere Spannschrauben zur Fixierung der Mischkartusche im Aufnahmeraum oder Abdeckkappen.

In Abweichung beispielsweise von einer herkömmlichen Niederdruckarmatur, kann die Mischkartusche in erfindungsgemäßen Wasserhähnen im Aufnahmeraum mittels ein oder mehrere Fixierelemente in zwei verschiedenen Stellungen fixiert werden, wobei die Fixierung durch Wechselwirkung von ein oder mehr Fixierelementen mit ein oder mehreren ersten Fixierstellen bzw. ein oder mehreren zweiten Fixierstellen erfolgt.

Als Fixierelemente und zugehörige Fixierstellen kommen dabei grundsätzlich sämtliche gebräuchliche Mittel in Betracht, mit denen der Fachmann die Kartusche im Innenraum fixieren kann. Neben Fixierungen durch Stift und Loch oder Schraub und Gewinde, kommen insbesondere die Verkeilung mittels Vorsprüngen und Löchern in Frage, wobei bevorzugt die Mischkartusche als Fixierelemente ein oder mehr Vorsprünge umfasst, die durch Wechselwirkung mit im Boden des Aufnahmeraums angeordneten Ausnehmungen zu einer Fixierung der Mischkartusche im Aufnahmeraum führen.

Dem Fachmann ist, da es um die relative Anordnung der Öffnungen in der Kartusche zu den Löchern im Boden geht, bewusst, dass die erfindungsgemäße Fixierung zumindest soweit erfolgen muss, dass eine horizontale Verschiebung der Mischkartusche gegenüber dem Boden des Aufnahmeraumes, sowie eine Rotation der auf dem Boden des Aufnahmeraums aufgesetzten Mischkartusche unterbunden werden muss.

Die erste Stellung, die im Rahmen der Erfindung als N-Stellung bezeichnet wird, ist derart ausgestaltet, dass die erste Öffnung nur über dem ersten Loch, die zweite Öffnung nur über dem dritten Loch und die dritte Öffnung über dem zweiten Loch liegt, während die zweite Stellung, im Rahmen der Erfindung als H-Stellung bezeichnet, dadurch gekennzeichnet ist, dass die erste Öffnung nur über dem dritten Loch, die zweite Öffnung nur über dem zweiten Loch und die dritte Öffnung nur über dem ersten Loch liegt. Diese Definitionen beziehen sich auf die Öffnungen, die in der vom Stellhebel abgekehrten Stirnseite der Mischkartusche angeordnet sind und die Löcher auf die Löcher im Boden des Aufnahmeraums für die Aufnahme der Mischkartusche im Batteriekörper.

Der Fachmann erkennt, dass der erfindungsgemäße Wasserhahn so ausgelegt ist, dass es zwei alterative Stellungen gibt, in denen die Mischkartusche im Aufnahmeraum des Batteriekörpers angeordnet werden kann. Der Fachmann versteht, dass ein Wasserhahn, der lediglich eine der beiden Stellungen realisieren kann und nicht durch einfache Umlagerung der Mischkartusche in die zweite Stellung umgebaut werden kann, kein erfindungsgemäßer Wasserhahn im Sinne der Erfindung ist.

Dabei ist für den Fachmann selbstverständlich, dass die Fixierung in einem grundsätzlich funktionsfähigen Zustand erfolgen muss, d. h. einem Zustand, der in einem prinzipiell einsatzfähigen Wasserhahn mit Mischbatterie resultiert. Somit ist klar, dass ein nicht funktionsfähiger Wasserhahn, in dem die Mischkartusche nicht mit dem Boden des Aufnahmeraums abschließt und somit ihrer grundlegenden Funktion nicht gerecht werden kann, nicht erfindungsgemäß ist, auch wenn die entsprechenden relativen Anordnungen der Löcher und Öffnungen durch eine untechnische Anordnung der Mischkartusche im Aufnahmeraum prinzipiell möglich sein sollte. Gleichfalls versteht der Fachmann unmissverständlich, dass die Mischkartusche im Aufnahmeraum mittels ein oder mehrere Fixierelemente durch Wechselwirkung mit ein oder mehreren ersten bzw. zweiten Fixierstellen fixiert werden kann und dass dies nicht aussagt, dass die zwei Stellungen gleichzeitig realisiert werden müssen.

Wesentlich im Rahmen der vorliegenden Erfindung ist der Umstand, dass die Mischkartusche in der ersten Stellung (N) und der zweiten Stellung (H) jeweils so fixiert werden kann, dass jede Öffnung jeweils nur über einem der Löcher im Boden des Aufnahmeraums liegt und von diesem gespeist wird, sodass ausgeschlossen ist, dass durch die gleiche Öffnung eine flüssigkeitsleitende Verbindung zwischen zwei Löchern entsteht und eine solche flüssigkeitsleitende Verbindung zwischen zwei oder mehr Löchern entsprechend nur durch Positionierung des Stellhebels und damit durch Verschiebung der Keramikplatten in der Mischkartusche erfolgen kann.

In Rahmen dieser Erfindung wird aus Gründen der Effizienz vom Einsatz herkömmlicher Mischkartuschen ausgegangen, wie sie im Stand der Technik bekannt sind und wie sie im stark überwiegendem Anteil am Markt verfügbar sind. Die vorstehende Lehre lässt sich jedoch unter Verwendung von für den Fachmann gebräuchlichen Überlegungen prinzipiell auch auf jede andere Mischkartusche übertragen, sofern diese ursprünglich zum Einsatz in einer Mischbatterie vorgesehen war.

Der erfindungsgemäße Wasserhahn löst die vorstehend beschriebenen Aufgaben und ermöglicht es, abhängig von der Stellung der Mischkartusche im Aufnahmeraum den Wasserhahn sowohl im Hochdruck- als auch im Niederdruckbetrieb einzusetzen.

Hierbei ist die erste Stellung (N) die Stellung, in der der erfindungsgemäße Wasserhahn als Niederdruckarmatur geeignet ist und die zweite Stellung (H) die Stellung, in der der erfindungsgemäße Wasserhahn für den Einsatz als Hochdruckarmatur geeignet ist.

Dass ein Batteriekörper so ausgelegt wird, dass eine einzige Kartusche in zwei Stellungen der vorstehend beschriebenen Art fixiert und verwendet werden kann, um damit einen vielseitigen Wasserhahn zu schaffen, der sowohl für Hochdruck- und Niederdruckbetrieb geeignet ist, ist ein zentrales Element der vorliegenden Erfindung. Im Lichte dieser klaren Lehre kann der Fachmann die konstruktive Ausgestaltung zur Realisierung der vorstehenden Merkmale den Anforderungen und Bedürfnissen seines eigenen Fertigungsbetriebes und der von ihm angebotenen Wasserhähne anpassen. Beispiele für besonders bevorzugte konstruktive Ausgestaltungen, mit denen sich die vorstehende Anordnung besonders effizient realisieren lässt und die der Fachmann unter Verwendung herkömmlicher Werkzeuge und Arbeitstechniken sowohl umsetzen als auch an seine geänderten Bedürfnisse anpassen kann, sind im Folgenden gezeigt.

Wesentlich für das Verständnis der Erfindung ist es, sich den Fluss der Wasserströme im inneren des Wasserhahns zu visualisieren. Hierfür ist es zielführend, sich die Anschlüsse an die Wasserleitungen des erfindungsgemäßen Wasserhahns in den verschiedenen Betriebsarten vor Augen zu führen.

Wenn die Mischkartusche in der N-Stellung ist, ist der erfindungsgemäße Wasserhahn für den Einsatz als Niederdruckarmatur geeignet, dabei wird der erste Anschluss mit einer Kaltwasserzufuhr verbunden, der zweite Anschluss mit dem Kaltwassereingang einer Niederdruckheizung, z.B. einem drucklosen Boiler, und der dritte Anschluss mit dem Heißwasserausgang der Niederdruckheizung verbunden. Über das erste Loch im Batteriekörper gelangt kaltes Wasser bei Bedarf zur ersten Öffnung von der ersten Öffnung gelangt das Wasser im inneren der Kartusche zur zweiten Öffnung und von da aus ins dritte Loch, von wo es über den dritten Kanal und den darin angeordneten Auslauf zum Wasserauslauf gelangt.

Niederdruckheizungen, die auch als offene oder drucklose Warmwasserspeicher bezeichnet werden, sind dem Fachmann bekannt. Grundsätzlich können im Rahmen der vorliegenden Erfindung sämtliche gebräuchlichen Niederdruckheizungen eingesetzt werden.

Wird durch Betätigung des Stellhebels Heißwasser angefordert, gelangt kaltes Wasser aus dem ersten Loch über die erste Öffnung und die dritte Öffnung in das zweite Loch, von wo es der Niederdruckheizung zugeführt wird. Das von der Niederdruckheizung bereitgestellte Heißwasser kehrt von der Niederdruckheizung über den dritten Anschluss in den dritten Kanal zurück und über den im dritten Kanal angeordneten Auslass zum Wasserauslauf.

Im Gegensatz hierzu ist der Wasserhahn in der H-Stellung für den Einsatz als Hochdruckarmatur geeignet, wobei die Kaltwasserzufuhr an den ersten Anschluss und die Heißwasserzufuhr an den zweiten Anschluss verbunden wird. Darüber hinaus ist es nötig, den dritten Anschluss zu verschließen, beispielsweise mit einem Stopfen. Im Sinne der vorliegenden Erfindung fasst der Ausdruck Stopfen alle Strukturen und Elemente, die dazu geeignet sind, den dritten Anschluss zumindest in die Richtung der Leitung flüssigkeitsdicht zu verschließen, wobei insbesondere ein Verschluss bevorzugt ist, der sich rückstandslos entfernen lässt. Ganz besonders bevorzugt sind Abdichtelemente mit Schraubgewinde.

In dieser Anordnung gelangt bei der Anforderung von kaltem Wasser dieses durch das erste Loch und durch die dritte Öffnung in die Kartusche und von der dritten Öffnung über die erste Öffnung in das dritte Loch. Aus dem dritten Kanal gelangt die Flüssigkeit lediglich über den im dritten Kanal angeordneten Auslass zum Wasserauslauf, da der dritte Anschluss durch den Stopfen verschlossen ist. Wird der Stellhebel in Heißwasserposition bewegt, gelangt heißes Wasser über die zweite Öffnung in die Kartusche und von der zweiten Öffnung über die erste Öffnung in das dritte Loch, über welches das heiße Wasser erneut über den Auslass zum Wasserauslauf gelangt.

Durch die ständige Durchspülung des mit dem Stopfen verschlossenen dritten Kanals mit dem aus dem ersten und zweiten Kanal stammenden Heiß- und Kaltwasser wird verhindert, dass sich abgestandenes Wasser anlagert, welches unter gesundheitlichen Aspekten nachteilig sein könnte. Auch nach längeren Phasen des Nichtbetriebes kann durch einen verhältnismäßig kurzen Vorlauf des Wasserhahns eine gleichbleibend hohe Wasserqualität sichergestellt werden.

Entsprechend sind erfindungsgemäße Wasserhähne besonders bevorzugt, wobei der Wasserhahn mit einer in der ersten Stellung (N) fixierten Mischkartusche für den Einsatz als Niederdruckarmatur geeignet ist, wobei insbesondere der erste Anschluss mit einer Kaltwasserzufuhr verbunden wird, der zweite Anschluss mit dem Kaltwassereingang einer Niederdruckheizung verbunden wird und der dritte Anschluss mit dem Heißwasserausgang einer Niederdruckheizung verbunden wird, und
wobei der Wasserhahn mit einer in der zweiten Stellung (H) fixierten Mischkartusche für den Einsatz als Hochdruckarmatur geeignet ist, wenn der dritte Anschluss verschlossen wird, bevorzugt mit einem Stopfen, wobei insbesondere der erste Anschluss mit einer Kaltwasserzufuhr verbunden wird und der zweite Anschluss mit einem Heißwasseranschluss verbunden wird.

Die erfindungsgemäßen Wasserhähne sind mit lediglich kleinen Modifikationen, die im Zweifelsfall auch vom Laien ausgeführt werden können, innerhalb kurzer Zeit schnell und kosteneffizient so umzugestalten, dass die sowohl für Hochdruckarmaturen als auch für Niederdruckarmaturen eingesetzt werden können. Dabei verwenden die erfindungsgemäßen Wasserhähne lediglich handelsübliche Kartuschen und können somit besonders leicht mit bereits bestehenden Strukturen verwendet werden und benötigen für die Wartung der regelmäßig als Verschleißteil besonders anfälligen Mischkartuschen keine Sonderanfertigungen.

Die Realisierung der erfindungsgemäßen Wasserhähne ist vor allem eine Aufgabe der korrekten Platzierung der Löcher im Boden des Aufnahmebereichs des Batteriekörpers, wobei die Herstellung erfindungsgemäßer Wasserhähne mit etablierten Vorrichtungen und Verfahren vorgenommen werden kann, die in herkömmlichen Manufakturen für Wasserhähne bereits zum Einsatz kommen, da diese ebenfalls die Anbringung von Löchern im Boden des Batteriekörpers erfordern.

In eigenen Versuchen hat sich auch gezeigt, dass der erfindungsgemäße Wasserhahn besonders sicher ist und auch von unkundigen Verbrauchern sicher installiert werden kann, da selbst ein unfachgemäßer Anschluss des Wasserhahns, d.h. ein Anschluss der auf Hochdruck- oder Niederdruck eingestellten Armatur das jeweils andere System, nicht zu den für herkömmlichen Wasserhähne üblichen Problemen führt, sondern sich lediglich in einer unvorteilhaften Vermischung der Warm- und Heißwasserströme äußert, die zu einer Verminderung der erreichbaren Warmwassertemperatur führt. Der Verbraucher kann in diesem Fall problemlos die Position der Mischkartusche im Aufnahmeraum ändern und einen ordnungsgemäßen Betrieb ermöglichen.

Besonders bevorzugt sind erfindungsgemäße Wasserhähne, wobei der erste und/oder zweite und/oder dritte Anschluss, bevorzugt alle Anschlüsse, mit Schraubgewinden versehen sind,
und/oder
wobei an dem dritten Anschluss und/oder in dem mit dem dritten Anschluss verbundenen Schlauch ein Rückschlagventil angeordnet ist, welches zur Verbindung des dritten Kanals mit einer Wasserleitung geeignet ist und einen Flüssigkeitsaustritt in die Wasserleitung aus Richtung des Aufnahmeraums verhindert, wobei das Rückschlagventil bevorzugt ein Gewinde zwischen 1/8 Zoll und 1/2 Zoll (d.h. zwischen 3,175 mm und 12,7 mm) und besonders bevorzugt von 3/8 Zoll (d.h. 9,525 mm) besitzt.

Die Anbringung von Schraubgewinden an dem ersten und/oder zweiten und/oder dritten Anschluss ist bevorzugt, weil es eine sichere und schnelle Anbringung der Wasserschläuche bzw. Wasserleitungen ermöglicht und regelmäßig besonders leicht an bereits bestehende Infrastruktur angeschlossen werden kann. Ganz besonders bevorzugt sind sowohl der erste, der zweite als auch der dritte Anschluss mit Schraubgewinden versehen.

In einer Weiterentwicklung der Erfindung hat sich als ganz besonders vorteilhaft erwiesen, wenn der dritte Anschluss, d.h. der Anschluss an dem dritten Kanal, der mit dem dritten Loch im Boden des Aufnahmebereichs verbunden ist und der zudem den Auslass umfasst, ein Rückschlagventil angeordnet ist. Als Rückschlagventil wird hierbei ein Bauteil verstanden, welches die Strömung eines Fluids, insbesondere einer Flüssigkeit, in nur eine Richtung zulässt. Die Zulässige Strömungsrichtung ist dabei so gewählt, dass Flüssigkeit aus der Flüssigkeitsleitung in den Batteriekörper und den Aufnahmeraum für die Aufnahme der Mischkartusche eindringen kann, jedoch keine Flüssigkeit aus dem dritten Kanal in die am dritten Anschluss über das Rückschlagventil angeordnete Wasserleitung eindringen kann.

Für das erfindungsgemäß einzusetzende Rückschlagventil können sämtliche dem Fachmann geläufige Bauteile verwendet werden, sofern sie die Strömung eines Fluid in nur eine Richtung zulassen.

Diese besondere Ausgestaltung des erfindungsgemäßen Wasserhahns hat den großen Vorteil, dass die Anbringung eines separaten Stopfens zur Einstellung des erfindungsgemäßen Wasserhahns auf den Hochdruckbetrieb nicht mehr nötig ist und insbesondere kein separater Stopfen zur Verfügung gestellt werden muss, um es dem Verbraucher zu ermöglichen, die Apparatur umzubauen. Dadurch vermindert sich der Aufwand erheblich, welcher mit dem Umbau der Apparatur zwischen dem Hochdruck- und Niederdruckbetrieb verbunden ist. Insbesondere erhöht sich dadurch auch die Betriebssicherheit, da insbesondere Wasserschäden vermieden werden können, die anderenfalls beim Einbau des erfindungsgemäßen Wasserhahns durch Unkundige (z.B. durch Nichtanbringung des Stopfens oder eine unzureichende Dichtung) auftreten könnten. Als positiver Nebeneffekt wird im Niederdruckbetrieb zudem verhindert, dass Wasser aus der Mischbatterie beim reinen Kaltwasserbetrieb in die Niederdruckheizung gelangt. Die bevorzugten Wasserhähne sind somit ganz besonders vorteilhaft und lösen die vorstehend definierten Aufgaben besonders gut.

Daher ermöglicht das Rückschlagventil den schnellen Wechsel zwischen dem Hochdruck- und dem Niederdruckbetrieb, da kein Stopfen angebracht werden muss, um den Hochdruckbetrieb einzustellen. In synergistischer Weise schützt das Rückschlagventil dabei zudem die Niederdruckheizung vor Wasser, welches beispielsweise bei Anforderung von kaltem Wasser aus der falschen Richtung in die Niederdruckheizung eindringen könnte. Besonders günstig kann es für manche Anwendungen sein, dass bei Vorliegen eines Rückschlagventils die Niederdruckheizung einfach an den dritten Anschluss angeschlossen bleiben kann, auch wenn der erfindungsgemäße Wasserhahn zwischenzeitlich im Hochdruckbetrieb betrieben wird. Dadurch wird der Umbauaufwand noch weiter reduziert, der mit dem möglichst gleichzeitigen Betrieb (bzw. dem schnellen Wechsel der Betriebsart) andernfalls einherginge. Die Eignung des erfindungsgemäßen Wasserhahns für bestimmte Anwendungen ist deshalb besonders hoch. Als Beispiel für solche besonderen Anwendungen kommen vor allem mobile Anwendungen in Betracht, z.B. bei Wohnmobilen, Boten oder Schiffen bei denen eine Armatur teilweise im Hochdruckbetrieb an einem stationären Wassernetz (z.B. auf einem Stellplatz) oder im mobilen Betrieb mit einer Niederdruckheizung betrieben werden soll.

Zusätzlich oder alternativ zu einer unmittelbaren Anbringung des Rückschlagventils am dritten Auslass, kann das Rückschlagventil auch in der Wasserzuleitung, welche vom Wasseranschluss zum dritten Anschluss führt, angeordnet sein.

Besonders bevorzugt sind erfindungsgemäße Wasserhähne, wobei die Mischkartusche ein oder mehrere Positionsmarkierungen aufweist, die bei Fixierung der Mischkartusche im Aufnahmeraum anzeigen, ob die erste (N) oder die zweite Stellung (H) eingestellt ist.

Diese bevorzugten Wasserhähne sind deshalb besonders vorteilhaft, weil es durch die auf der Mischkartusche angebrachte Positionsmarkierung für den Anwender ersichtlich ist, in welcher Stellung sich die Mischkartusche gerade befindet. Hierdurch wird die Notwendigkeit entfernt, durch Versuche herauszufinden, in welcher Stellung der erfindungsgemäße Wasserhahn derzeit eingestellt ist. Eine geeignete Positionsmarkierung lässt sich durch übliche dem Fachmann bekannte Mittel erzeugen und kann beispielsweise durch eine Beschriftung der Mischkartusche mit geeigneten Buchstaben, beispielsweise N oder H, erfolgen, wobei diese bevorzugt mit einer weiteren Markierung auf dem Batteriekörper zusammenwirken, beispielsweise mit einem abgebildeten Pfeil, der in der ersten und zweiten Stellung jeweils auf die entsprechende Positionsmarkierung zeigt.

Besonders bevorzugt sind erfindungsgemäße Wasserhähne, wobei der Aufnahmeraum in der Wand des Batteriekörpers eine Ausnehmung aufweist, durch die zumindest eine Positionsmarkierung der Mischkartusche von der Außenseite des Batteriekörpers zu erkennen ist, insbesondere beim Betrieb des Wasserhahns, wobei die Ausnehmung bevorzugt kreisförmig ist und bevorzugt einen Durchmesser von 8 bis 15 mm aufweist, ganz besonders bevorzugt von 9 bis 12 mm, und/oder wobei der Mittelpunkt der Ausnehmung 8 bis 25 mm, bevorzugt 10 bis 15 mm über dem Boden des Aufnahmeraums liegt.

Entsprechende erfindungsgemäße Wasserhähne sind besonders bevorzugt, weil eine vollständige oder teilweise Demontage des Wasserhahns zur Identifikation des eingestellten Betriebs nicht notwendig ist. Dadurch lässt sich bereits am zusammengebauten Wasserhahn schnell erkennen, ob dieser bereits iauf den gewünschten Betrieb eingestellt ist. Dies hat ganz besondere Vorteile für die Wartung der Armatur, da sofort ersichtlich ist, ob der eingestellte Betrieb des Wasserhahns zu den vor Ort angetroffenen Anlage passt oder ob eine Modifikation des Betriebs durch Fixierung der Mischkartusche in der anderen Stellung notwendig ist. In bevorzugten Wasserhähnen wird die äußere Erkennbarkeit der Positionsmarkierung durch eine Ausnehmung in der Wand des Batteriekörpers gebildet, durch die von außen der Teil der Mischkartusche zu erkennen ist, der die Positionsmarkierung trägt.

Besonders bevorzugt sind erfindungsgemäße Wasserhähne, wobei die Ausnehmung mit einer durchsichtigen Scheibe, bevorzugt aus Glas oder Kunststoff, verschlossen ist, wobei die Scheibe bevorzugt als Vergrößerungsglas wirkt.

Entsprechend bevorzugte Wasserhähne erzeugen nicht nur regelmäßig einen besonders wertigen optischen Eindruck, sondern verhindern auch einen ungewollten Austritt von Feuchtigkeit aus dem inneren des Batteriekörpers in die Umgebung. Bevorzugt wird die Scheibe dabei derart gewählt, beispielsweise durch Auswahl des Materials und des Schliffes, dass die Scheibe als Vergrößerungsglas dient, durch das die auf der Mischkartusche angebrachten Positionsmarkierungen von außen deutlicher und größer wahrgenommen werden können.

Besonders bevorzugt sind erfindungsgemäße Wasserhähne, wobei die Mischkartusche durch eine Spannschraube so auf den Boden des Aufnahmeraums gedrückt wird, dass eine flüssigkeitsdichte Verbindung entsteht und Flüssigkeit aus den Kanälen durch die Löcher lediglich in die Öffnungen und dadurch ins Innere der Mischkartusche gelangen kann.

Entsprechend bevorzugten Wasserhähne haben sich durch die Flüssigkeitsdichte Verbindung zwischen der Mischkartusche und dem Boden des Aufnahmeraumes als besonders betriebssicher herausgestellt und ermöglichen es effizient, einen ungewünschten Austritt von Flüssigkeit in den Aufnahmeraum, d.h. vorbei an der Mischkartusche, zu verhindern. Geeignete Spannschrauben sind dem Fachmann bekannt. In dieser bevorzugten Ausführungsform wird insbesondere die vom Stellhebel abgekehrte Stirnseite der Mischkartusche, also die Seite, die die erste, zweite und dritte Öffnung aufweist, auf den Boden des Aufnahmeraums, der das erste, zweite und dritte Loch umfasst, gedrückt, sodass die erfindungsgemäß einzustellenden Konnektivitäten zwischen den Löchern und Öffnungen und die Wechselwirkung zwischen den Fixierelementen und Fixierstellen eingestellt werden.

Flüssigkeitsdicht bedeutet in diesem Zusammenhang, dass bei den im üblichen Betrieb von Wasserhähnen einzusetzenden Drücken keine Flüssigkeit aus dem Spalt zwischen Mischkartusche und Boden des Aufnahmeraums in den Aufnahmeraum austritt.

Besonders bevorzugt sind erfindungsgemäße Wasserhähne, wobei zwei Fixierelemente durch Vorsprünge an der Mischkartusche gebildet werden und wobei zwei erste Fixierstellen durch erste Vertiefungen im Boden des Aufnahmebereichs gebildet werden und wobei zwei zweite Fixierstellen durch zusätzliche zweite Vertiefungen im Boden des Aufnahmebereichs gebildet werden.

Entsprechend bevorzugte Wasserhähne lassen sich in der Praxis besonders leicht herstellen, da herkömmliche Wasserhähne regelmäßig bereits über Vertiefungen im Boden des Aufnahmebereichs verfügen, sodass bei den Produzenten entsprechender Wasserhähne bereits die notwendigen Vorrichtungen zur Erzeugung dieser Fixierstellen vorliegen. Es ist für die Hersteller herkömmlicher Wasserhähne zwanglos möglich, neben den bisher vorliegenden ersten Fixierstellen auch weitere Fixierstellen im Boden des Aufnahmebereichs vorzusehen, in denen die Fixierelemente der Mischkartusche angebracht werden können. Entsprechende Wasserhähne sind auch deswegen besonders bevorzugt, weil die überwiegende Mehrheit der am Markt verfügbaren Mischkartuschen bereits über zwei Vorsprünge verfügt, die als Fixierelemente dienen in dem sie in die Vertiefung im Boden des Aufnahmebereichs eingreifen. Durch die Anordnung von Vertiefungen als zwei erste Fixierstellen und zwei zweiten Fixierstellen im Boden des Aufnahmebereichs können somit gebräuchliche Mischkartuschen in der ersten oder zweiten Stellung fixiert werden, die für den Hochdruck- oder Niederdruckbetrieb notwendig sind.

Besonders bevorzugt sind erfindungsgemäße Wasserhähne, wobei wobei der Boden des Aufnahmebereichs kreisförmig ist und einen Durchmesser (D) zwischen 20 und 65 mm, bevorzugt zwischen 25 und 55 mm, ganz besonders bevorzugt zwischen 30 und 45 mm aufweist, wobei der Durchmesser (D) insbesondere bevorzugt 43 mm beträgt.

Entsprechende Wasserhähne sind besonders bevorzugt, weil die entsprechenden Durchmesser denen entsprechen, die in herkömmlichen Wasserhähnen, d.h. sowohl in Hochdruck als auch Niederdruckarmaturen, bereits zum Einsatz kommen. Entsprechende erfindungsgemäße Wasserhähne lassen sich somit besonders effizient unter Verwendung der bereits bestehenden Produktionsmittel herstellen. Insbesondere lassen sich erfindungsgemäße Wasserhähne auch besonders leicht durch Umbau herkömmlicher Wasserhähne herstellen. Für diesen Umbau müssen vom Fachmann die Position und der Durchmesser der im Boden des Aufnahmebereichs angeordneten Löcher lediglich derart verändert werden, dass eine Anordnung wie im erfindungsgemäßen Wasserhahn vorgesehen, eingestellt werden kann, wobei darüber hinaus weitere Fixierstellen anzubringen sind, die die Fixierung der herkömmlichen Mischkartusche in den zwei erfindungsgemäßen Ausrichtungen zulassen.

Die Veränderung der Position und des Durchmessers der Löcher kann beim Umbau durch herkömmliche Methoden erfolgen, insbesondere durch spanabtragende Verfahren, die dem Fachmann aufgrund seines Fachwissens geläufig sind, sowie durch Modellierung der Lochgröße mittels plastisch formbarer und anschließend aushärtbarer Materialien oder durch das Einsetzen und Fügen von entsprechenden Einsätzen, mit denen der Lochdurchmesser verkleinert werden kann.

Besonders bevorzugt sind erfindungsgemäße Wasserhähne, wobei wobei die Position der Mittelpunkte der Löcher im Boden des Aufnahmebereichs in der Draufsicht durch ein Koordinatensystem beschrieben werden kann, dessen gleichlange, normierte Z- und Y-Achse parallel zur Oberfläche des Bodens verlaufen und sich jeweils zwischen -1 und +1 erstrecken,
wobei der Mittelpunkt des ersten Loches bei y=+0,25 bis y=+0,4 und z=-0,01 bis z=-0,1, bevorzugt bei y=+0,3 bis y=+0,35 und z=-0,015 bis z=-0,05, ganz besonders bevorzugt bei y=+0,333 und z=-0,023 liegt, und
wobei der Mittelpunkt des zweiten Loches bei y=-0,15 bis y=-0,3 und z=-0,27 bis z=-0,43, bevorzugt bei y=-0,18 bis y=-0,23 und z=-0,32 bis z=-0,36, ganz besonders bevorzugt bei y=-0,201 und z=-0,341 liegt, und
und wobei der Mittelpunkt des dritten Loches bei y=-0,10 bis y=-0,25 und z=0,2 bis z=0,35, bevorzugt bei y=-0,16 bis y=-0,22 und z=0,25 bis z=0,3, ganz besonders bevorzugt bei y=-0,193 und z=+0,279 liegt,
und/oder
wobei der Durchmesser der Löcher 10 bis 30 %, bevorzugt 15 bis 25 %, ganz besonders bevorzugt 19 bis 21% des Durchmessers der Mischkartusche an der vom Stellhebel abgekehrten Stirnseite beträgt.

Entsprechende Wasserhähne sind besonders bevorzugt, weil sie nicht nur eine besonders wirksame Einstellung der Lochposition im erfindungsgemäßen Wasserhahn ermöglichen, sondern insbesondere darauf ausgelegt sind, durch minimale Änderungen aus herkömmlichen Wasserhähnen erzeugt zu werden. Bei der Herstellung entsprechend bevorzugter Wasserhähne sind somit nur verhältnismäßig geringe Änderungen an dem zur Herstellung verwendeten Verfahren gegenüber herkömmlichen Wasserhähnen nötig. Gleichzeitig kann der Umbau herkömmlicher Wasserhähne zu einem erfindungsgemäßen Wasserhahn unter vergleichsweise geringen Arbeitsaufwand erfolgen.

Die vorstehend angegebene Definition dient dazu, dem Fachmann eine Lehre zu vermitteln, die vom tatsächlichen Durchmesser und der Form des Aufnahmebereichs im Batteriekörper unabhängig ist. Die Verwendung eines Koordinatensystems mit gleichlangen und normierten Z- und Y-Achsen ermöglicht eine von der tatsächlichen Ausgestaltung des Aufnahmebereichs unabhängige Anwendung der erfinderischen Lehre.

In der Draufsicht auf den Boden des Aufnahmebereichs kann die Position der Mittelpunkte der Löcher entsprechend durch ein übergelegtes Koordinatensystem beschrieben werden, welches parallel zur Oberfläche des Bodens verläuft und dessen Achsen sich jeweils zwischen -1 und +1 erstrecken. Die Position der Mittelpunkte der Löcher ist jeweils auf den gleichlangen und normierten Achsen mit positiven und negativen Z- und Y-Koordinaten angegeben. Dieses Prinzip lässt sich besonders anschaulich erklären, wenn von einem kreisförmigen Boden des Aufnahmebereichs ausgegangen wird. Unter der Annahme der Radius des Kreises läge bei 20 mm, würde der Mittelpunkt des Koordinatensystems beispielsweise im Mittelpunkt des Kreises liegen, wobei die Endpunkte der Z- und Y-Achsen bei +20 mm und -20 mm liegen würden. Der Mittelpunkt des ersten Lochs läge somit beispielsweise bei y = +5 mm bis y = +8 mm und z = -0,2 bis z = -2 mm. Wird nunmehr der Radius auf 40 mm verdoppelt, so erstrecken sich die normierten Z- und Y-Achsen weiterhin zwischen -1 und +1, dies entspricht jedoch einem Verlauf zwischen -40 mm und +40 mm. Der Mittelpunkt des ersten Lochs läge entsprechend bei y = +10 mm bis y = +16 mm und z = -0,4 bis z = -4 mm.

Der Fachmann erkennt somit, dass die vorstehend als bevorzugt angegebenen Angaben eine Lehre über die relative Anordnung der Löcher zueinander ist, die stufenlos skaliert werden kann, solange sich die Anordnung der Löcher zueinander nicht ändert. Es versteht sich von selbst, dass das beschriebene Koordinatensystem lediglich ein Hilfselement zur Beschreibung der Position der Löcher ist und in erfindungsgemäßen Wasserhähnen nicht selbst abgebildet sein muss. Insbesondere ist es nicht notwendig, dass die Grundfläche des Bodens des Aufnahmebereichs kreisförmig ist oder die Wände des Aufnahmebereichs die Z- oder Y-Achse bei -1 oder +1 schneiden. Voraussetzung ist lediglich, dass die Anordnung der Mittelpunkte durch ein in geeigneter Weise platziertes theoretisches Koordinatensystem beschrieben werden kann, d.h., dass die Löcher im Boden des Aufnahmebereichs die erfindungsgemäße relative Anordnung zueinander aufweisen.

Die vorstehenden Ausführungen zu der Anordnung der Löcher im Boden des Aufnahmebereichs gelten in gleicher Weise auch für die Anordnung der ersten und zweiten Fixierstellen.

Besonders bevorzugt sind entsprechend erfindungsgemäße Wasserhähne, wobei die ersten und zweiten Fixierstellen durch Vertiefungen gebildet werden,
und
wobei die Position der Mittelpunkte der ersten und zweiten Fixierstellen im Boden des Aufnahmebereichs in der Draufsicht durch ein Koordinatensystem beschrieben werden kann, dessen gleichlange, normierte Z- und Y-Achse parallel zur Oberfläche des Bodens verlaufen und sich jeweils zwischen -1 und +1 erstrecken,
wobei die Mittelpunkte der zwei ersten Fixierstellen
bei y=0,4 bis y=0,5 und z=0,38 bis z=0,48, bevorzugt bei y=0,457 und z=0,426, sowie
bei y=0,4 bis y=0,5 und z=-0,37 bis z=-0,47, bevorzugt bei y=0,4442 und z=-0,419 liegen,
und wobei die Mittelpunkte der zwei zweiten Fixierstellen
bei y=0,09 bis y=0,19 und z=0,55 bis z=0,65, bevorzugt bei y=0,140 und z=0,605, sowie
bei y=-0,55 bis y=-0,65 und z=0,16 bis z=0,26, bevorzugt bei y=-0,589 und z=0,217 liegen.
und/oder
wobei der Durchmesser der Fixierstellen 6 bis 16 %, bevorzugt 7 bis 13 %, ganz besonders bevorzugt 8 bis 11 % des Durchmessers der Mischkartusche an der vom Stellhebel abgekehrten Stirnseite beträgt,
und/oder
wobei die Tiefe der Fixierstellen 5 bis 15 %, bevorzugt 6 bis 12 %, ganz besonders bevorzugt 7 bis 9 % des Durchmessers der Mischkartusche an der vom Stellhebel abgekehrten Stirnseite beträgt.

Ganz besonders häufig weisen herkömmliche Wasserhähne einen kreisförmigen Aufnahmebereich auf, dessen Boden einen Radius von 21,5 mm besitzt.

Besonders bevorzugt sind entsprechend erfindungsgemäße Wasserhähne, wobei die Position der Mittelpunkte der Löcher im Boden des Aufnahmebereichs in der Draufsicht durch ein Koordinatensystem beschrieben werden kann, dessen gleichlange Z- und Y-Achse parallel zur Oberfläche des Bodens verlaufen und sich jeweils zwischen -21,5 mm und +21,5 mm erstrecken, wobei der Mittelpunkt des ersten Loches bei y=+7,15 mm und z=-0,50 mm liegt, und wobei der Mittelpunkt des zweiten Loches bei y=-4,33 mm und z=-7,33 mm liegt, und wobei der Mittelpunkt des dritten Loches bei y=-4,15 mm und z=+6,00 mm liegt,
und/oder
wobei der Durchmesser der Löcher 8 mm beträgt.

Besonders bevorzugt sind entsprechend auch erfindungsgemäße Wasserhähne, wobei die Position der Mittelpunkte der ersten und zweiten Vertiefungen im Boden des Aufnahmebereichs in der Draufsicht durch ein Koordinatensystem beschrieben werden kann, dessen gleichlange Z- und Y-Achse parallel zur Oberfläche des Bodens verlaufen und sich jeweils zwischen -21,5 mm und +21,5 mm erstrecken, wobei die Mittelpunkte der zwei ersten Vertiefungen bei y=9,83 mm und z=9,16 mm sowie bei y=9,5 mm und z=-9 mm liegen, und wobei die Mittelpunkte der zwei zweiten Vertiefungen bei y=3 mm und z=13 mm, sowie bei y=-12,66 mm und z=4,66 mm liegen,
und/oder
wobei der Durchmesser der Fixierstellen 4,15 mm beträgt,
und/oder
wobei die Tiefe der Fixierstellen 3,5 mm beträgt.

Entsprechend bevorzugte Wasserhähne sind somit nicht nur, wie vorstehend erläutert, besonders effizient zu fertigen oder umzubauen, sondern die Rohlinge für die Fertigung und/oder den Umbau sind auch besonders leicht verfügbar. Gleichzeitig sind entsprechende bevorzugte Wasserhähne kompatibel mit einer hohen Zahl Küchen und/oder Badeinrichtungen, die auf die entsprechende Größe des Batteriekörpers abgestimmt sind.

Nachfolgend wird die Erfindung am Beispiel der Figuren genauer erläutert. Dabei haben gleiche Bezugszeichen in den Figuren jeweils die gleiche Bedeutung.

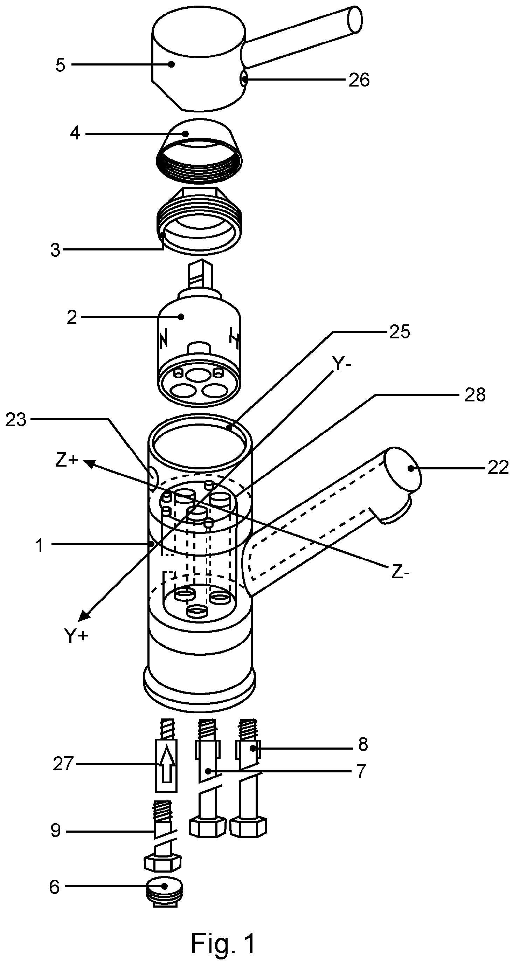

Figur 1 zeigt den grundsätzlichen Aufbau eines erfindungsgemäßen Wasserhahns mit Mischbatterie in einer Explosionszeichnung einer bevorzugten Ausführungsform. An dem Batteriekörper 1 ist ein Wasserauslauf 22 angeordnet. Der Batteriekörper weist einen Aufnahmeraum 28 für die Aufnahme der Mischkartusche 2 auf. Der Aufnahmeraum 28 weist eine Ausnehmung 23 in der Seitenwand auf, durch die die auf der Mischkartusche 2 angebrachte Positionsmarkierung auch im zusammengebauten Zustand des Wasserhahns sichtbar ist. Nach Einsatz der Mischkartusche 2 in den Aufnahmeraum 28 wird diese durch eine Spannschraube 3 relativ zur x-Richtung (nicht eingezeichnet, orthogonal zur Y/Z-Ebene) fixiert, die in das Schraubgewinde 25 greift. Auf die Spannschraube 3 wird eine Abdeckkappe 4 gesetzt, bevor der Hebelarm 5 aufgesetzt wird. Der Hebelarm 5 umfasst auch einen Warm/Kalt-Indikator 26 zur Anzeige der Einstellung der Mischbatterie in Abhängigkeit von der Stellung des Hebelarms 5. Über die Unterseite des Batteriekörpers 1 wird der Wasserhahn über Anschlussschläuche 7, 8, 9 an die Wasserversorgung bzw. die Niederdruckheizung angeschlossen. Neben den Anschlussschläuchen sind in Figur 1 auch ein Rückschlagventil 27 und ein Stopfen 6 gezeigt, mit denen der dritte Anschluss 18 für den Hochdruckbetrieb verschlossen werden kann.

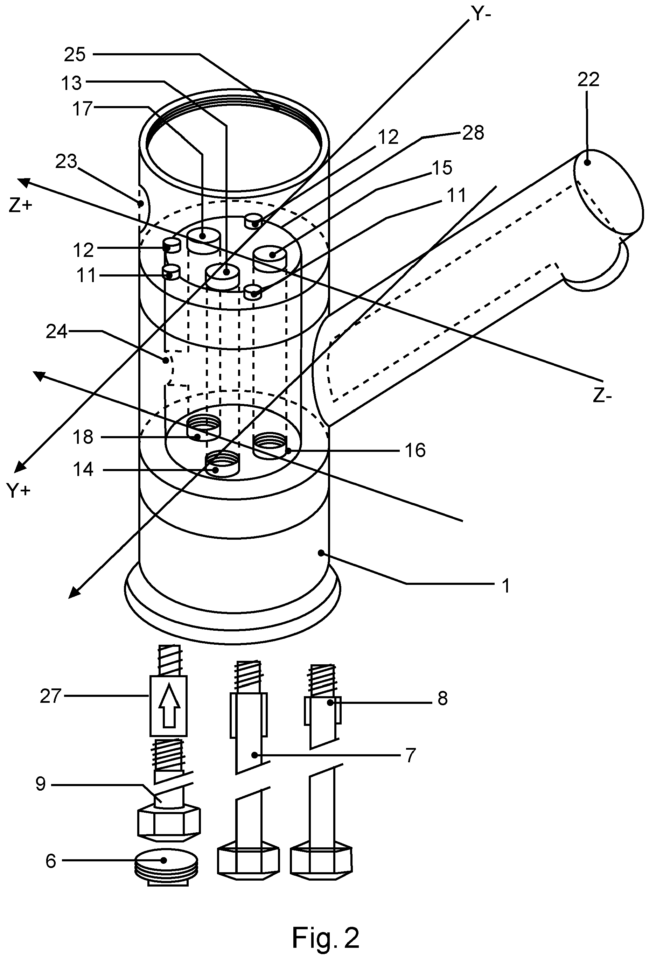

Figur 2 zeigt eine vergrößerte Darstellung des Batteriekörpers 1 aus Figur 1. Neben den bereits für Figur 1 beschriebenen Elementen, sind insbesondere das erste 13, zweite 15 und dritte Loch 17 im Boden des Aufnahmeraums zu erkennen. Die Löcher sind jeweils über den ersten, zweiten und dritten Kanal mit den entsprechenden ersten 14, zweiten 16 und dritten Anschlüssen 18 verbunden, an denen die Verbindung mit Wasserleitungen und/oder einer Niederdruckheizung 29 über die Anschlussschläuche 7, 8, 9 erfolgen kann. Der mit dem dritten Loch 17 verbundene dritten Kanal ist über einen Auslass 24 zusätzlich mit dem Wasserauslauf 22 verbunden. Im Boden des Aufnahmeraums 28 sind zudem die ersten 11 und zweiten Fixierstellen 12 zu erkennen, die in der dargestellten Ausführungsform jeweils als ein Paar von zwei Vertiefungen im Boden des Aufnahmeraums 28 ausgebildet sind.

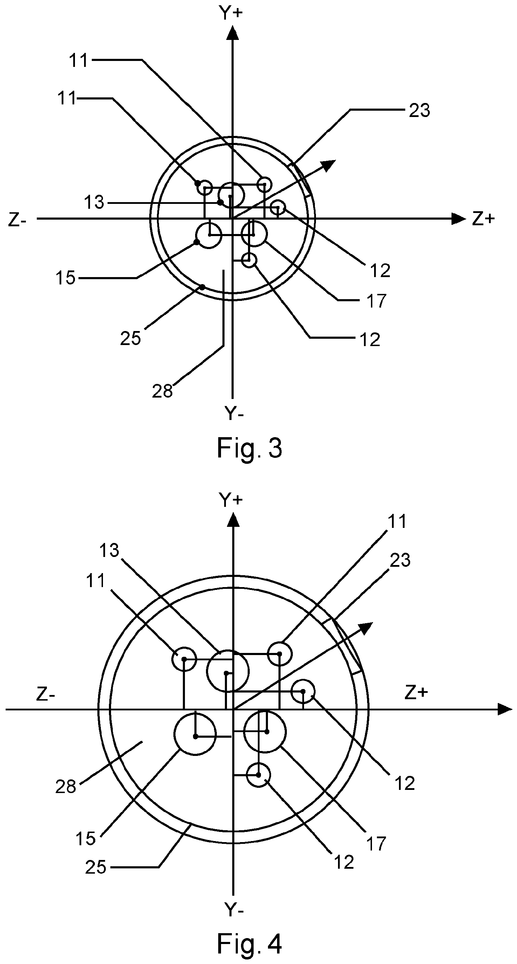

Die Figuren 3 und 4 zeigen beispielhaft eine Draufsicht auf den Boden des Aufnahmeraums 28, sodass sowohl das erste 13, zweite 15 und dritte Loch 17 als auch die ersten 11 und zweiten Fixierstellen 12 und sowie deren jeweilige Positionierung im Boden des Aufnahmeraums 28 deutlich zu erkennen sind. Lediglich als Hilfslinien sind die Y- und Z-Achse eines Koordinatensystems eingetragen, mit dem die relative Position der Löcher und Fixierstellen im Boden des Aufnahmebereichs 28 beschrieben werden kann. Um zu verdeutlichen, wie die Position der Mittelpunkte der Löcher und Fixierstellen von dem Koordinatensystem abgelesen werden kann, sind zudem weitere Hilfslinien eingezeichnet, die die Position der Mittelpunkte auf die Achsen projizieren. Zu erkennen ist in den Figuren 3 und 4 entsprechend ein Koordinatensystem, dessen gleichlange, normierte Z- und Y-Achse parallel zur Oberfläche des Bodens verlaufen und sich jeweils zwischen -1 und +1 erstrecken und durch das die Position der Mittelpunkte und Löcher beschrieben werden kann.

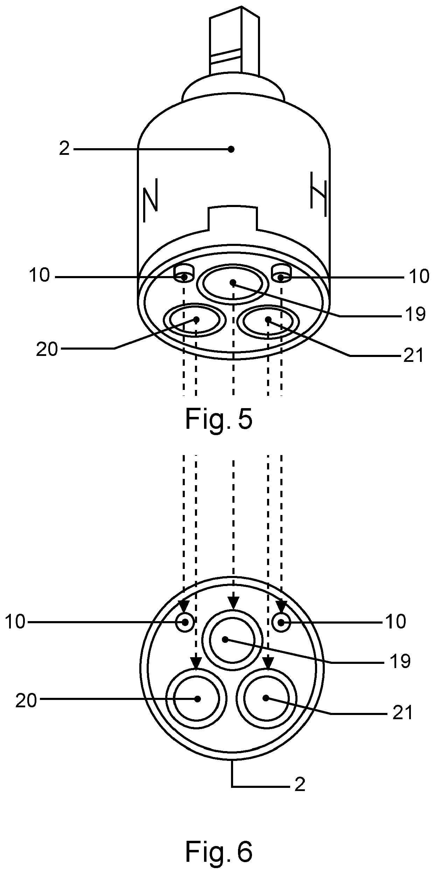

In den Figuren 5 und 6 ist eine Mischkartusche 2 in zwei Ansichten gezeigt, nämlich von der Seite und mit Blick auf die vom Stellhebel abgekehrte Seite. In beiden Fällen sind die erste 19, zweite 20 und dritte Öffnung 21, sowie die Fixierelemente 10 zu erkennen, bei denen es sich in der abgebildeten bevorzugten Ausführungsform um Vorsprünge handelt. Bei der abgebildeten Mischkartusche 2 handelt es sich um eine modifizierte Form einer am Markt gebräuchlichen Mischkartusche 2, die mit präzise angeordneten Positionsmarkierungen versehen wurde, deren Position auf die Position der Ausnehmung 23 und der ersten 11 bzw. zweiten Fixierstellen 12 abgestimmt ist, wie sie in den Figuren 1 bis 4 dargestellt sind.

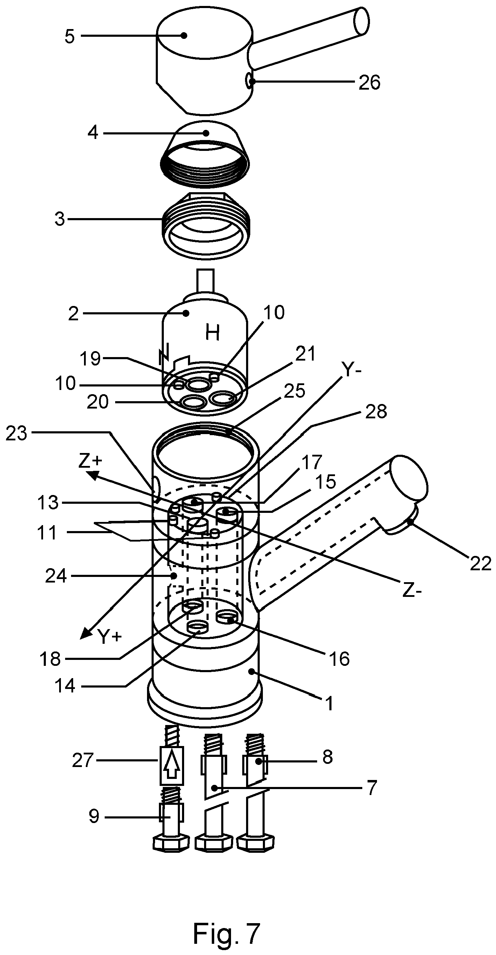

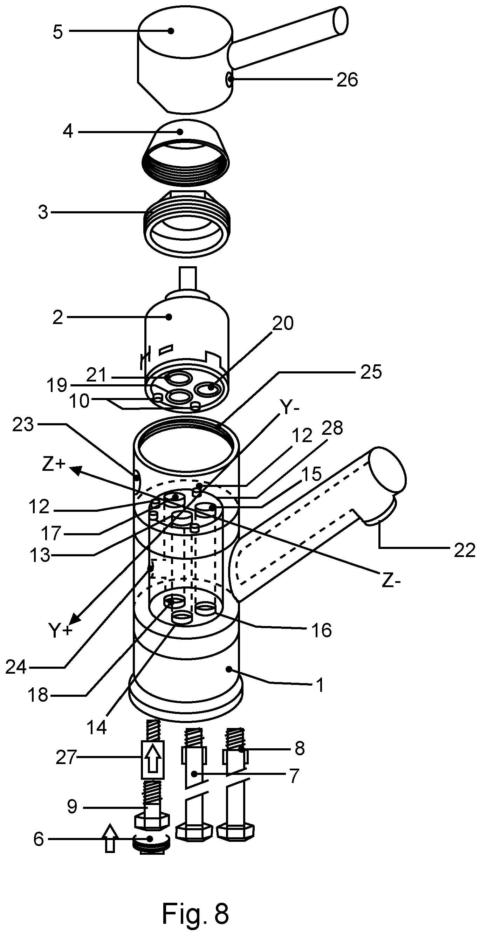

Die Figuren 7 und 8 zeigen den grundsätzlichen Aufbau eines erfindungsgemäßen Wasserhahns mit Mischbatterie in einer Explosionszeichnung einer bevorzugten Ausführungsform, wobei die in den Figuren 5 und 6 gezeigte Mischkartusche 2 einmal in der N-Stellung und einmal in der H-Stellung eingebaut wird. In der dargestellten bevorzugten Ausführungsform ist in den Figuren 7 und 8 damit die Einstellung für den Niederdruck- (N-Stellung) bzw. den Hochdruckbetrieb (H-Stellung) eingestellt, wobei deutlich zu erkennen ist, dass die Fixierelemente 10 der Mischkartusche 2 jeweils in die ersten 11 oder zweiten 12 Fixierstellen eingreifen, um die Bewegungsfähigkeit der Mischkartusche in der Y/Z-Ebene zu Beschränken und eine Rotation um die X-Ache (nicht gezeigt, orthogonal zur Y/Z-Ebene) zu verhindern.

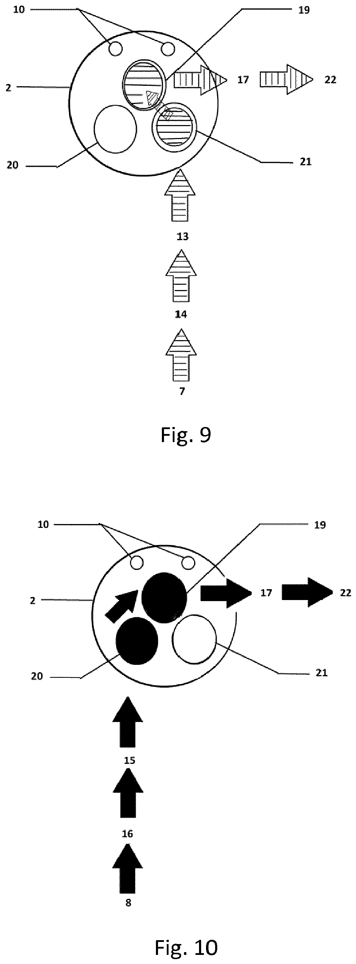

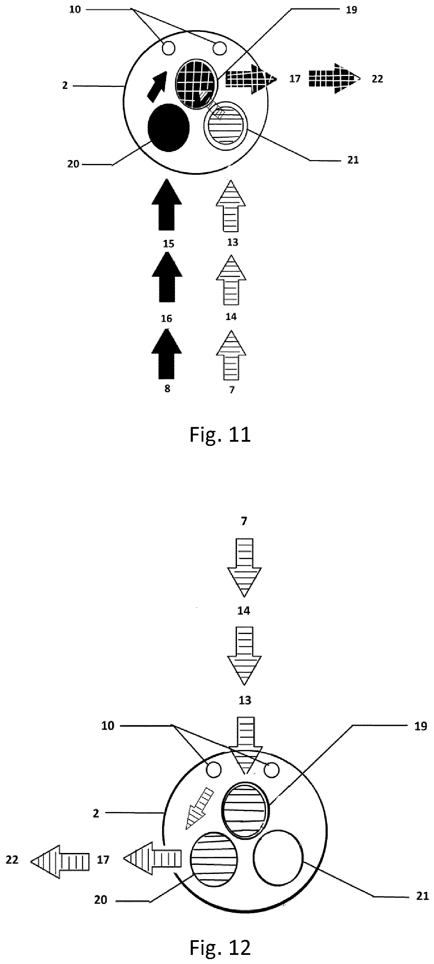

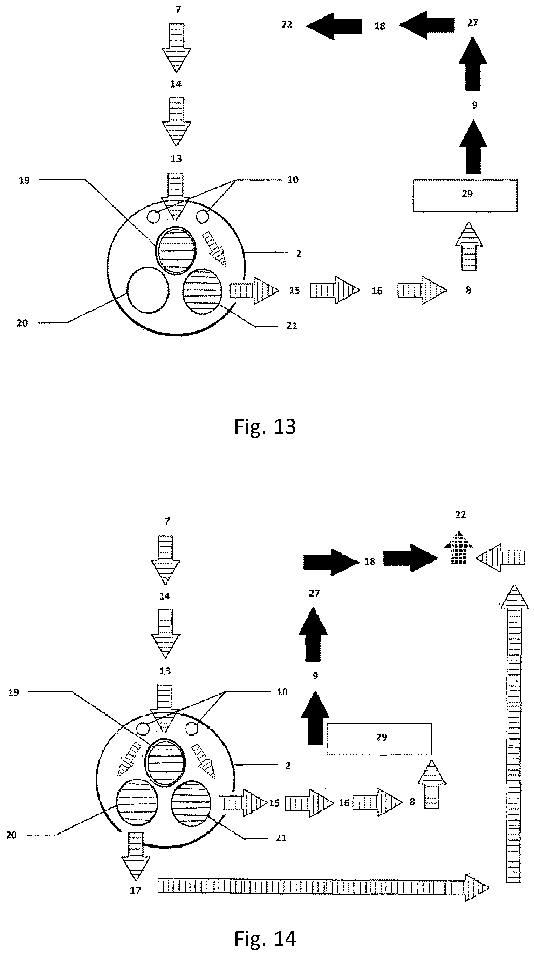

In den Figuren 9 bis 14 ist beispielhaft der Wasserfluss angedeutet, der sich in Abhängigkeit von der eingestellten Stellung des erfindungsgemäßen Wasserhahns und der angeforderten Wassertemperatur ergibt. Die Figuren zeigen dabei nacheinander die möglichen Varianten Hochdruckbetrieb/Kaltwasser (Figur 9), Hochdruckbetrieb/Warmwasser (Figur 10), Hochdruckbetrieb/Mischwasser (Figur 11), Niederdruckbetrieb/Kaltwasser (Figur 12), Niederdruckbetrieb/Warmwasser (Figur 13), Niederdruckbetrieb/Mischwasser (Figur 14).

Dabei kennzeichnen schraffierte Pfeile einen Kaltwasserstrom, schwarz ausgefüllte Pfeile einen Warmwasserstrom und schwarz ausgefüllte Pfeile mit weißer Schraffierung einen Mischwasserstrom. Entsprechende Darstellungen sind dem Fachmann bekannt, wobei die Bezugszeichen andeuten, in welcher Reihenfolge die verschiedenen Elemente und Baugruppen des Wasserhahns durchflossen werden. Dies lässt sich am Beispiel von Figur 9 veranschaulichen. Das kalte Wasser durchläuft den Anschlussschlauch 7 hin zum ersten Anschluss 14, von wo aus es durch den ersten Kanal zum ersten Loch 13 gelangt. Durch die dritte Öffnung 21 gelangt das Kaltwasser, bedingt durch die Stellung der Mischkartusche 2, in die erste Öffnung 19, von wo es durch das dritte Loch 17 in den dritten Kanal und schließlich über den Auslass 24 (in Figur 9 nicht gezeigt) zum Wasserauslauf 22 gelangt. Dieses Prinzip ist auf die Figuren 10 bis 14 entsprechend anwendbar.

Da die Figuren 12, 13 und 14 den Fluss der Wasserströme im Niederdruckbetrieb visualisieren, ist in diesen auch eine Niederdruckheizung 29 eingezeichnet, die der Erwärmung des über den Wasserhahn bereitgestellten Kaltwassers dient, welches dann über den dritten Anschluss 18 zum Wasserauslauf 22 geführt wird. Da die genaue Ausführung der Niederdruckheizung 29 für die Funktion der vorliegenden Erfindung nicht relevant ist, wird diese nur schematisch angedeutet. In den Figuren 13 und 14 ist zudem auch das Rückschlagventil 27 separat eingezeichnet, da die Aufnahme dieses Bauteils an der spezifischen Position zu einer besonders bevorzugten Ausführungsform der Erfindung führt. Die besonderen Vorteile, die sich aus der bevorzugten Anordnung des Rückschlagventils ergeben und die vorstehend beschrieben sind, sind für den Fachmann dabei insbesondere aus den Figuren 9 bis 14 ersichtlich.

### Bezugszeichen

- 1: Batteriekörper
- 2: Mischkartusche
- 3: Spannschraube
- 4: Abdeckkappe
- 5: Hebelarm
- 6: Stopfen
- 7: Anschlussschlauch
- 8: Anschlussschlauch
- 9: Anschlussschlauch
- 10: Fixierelement
- 11: erste Fixierstellen
- 12: zweite Fixierstellen
- 13: erstes Loch
- 14: erster Anschluss
- 15: zweites Loch
- 16: zweiter Anschluss
- 17: drittes Loch
- 18: dritter Anschluss
- 19: erste Öffnung
- 20: zweite Öffnung
- 21: dritte Öffnung
- 22: Wasserauslauf
- 23: Ausnehmung
- 24: Auslass
- 25: Schraubgewinde
- 26: Warm/Kalt-Indikator
- 27: Rückschlagventil
- 28: Aufnahmeraum
- 29: Niederdruckheizung

## Patentansprüche

1. Wasserhahn mit Mischbatterie, geeignet für die Verwendung als Hochdruck- und Niederdruckarmatur, umfassend:
einen Wasserauslauf (22),
einen Batteriekörper (1), und
eine Mischkartusche (2) mit einem Stellhebel,
wobei der Wasserauslauf (22) am Batteriekörper (1) angeordnet ist,
wobei der Batteriekörper (1) einen Aufnahmeraum (28) für die Aufnahme der Mischkartusche (2) aufweist, wobei der Boden des Aufnahmeraums ein erstes (13), ein zweites (15) und ein drittes Loch (17) umfasst, die sich als Kanäle durch den Batteriekörper (1) erstrecken und dazu geeignet sind, an der vom Aufnahmeraum abgewandten Außenseite des Batteriekörpers an einem zugehörigen ersten (14), zweiten (16) und dritten Anschluss (18) mit Wasserleitungen verbunden zu werden, wobei der mit dem dritten Loch (17) verbundene dritten Kanal über einen Auslass (24) zusätzlich mit dem Wasserauslauf (22) verbunden ist,
wobei die Mischkartusche (2) an der vom Stellhebel abgekehrten Stirnseite eine erste (19), eine zweite (20) und eine dritte Öffnung (21) aufweist, wobei durch Ausrichtung des Stellhebels eine Verbindung zwischen der ersten (19) und der zweiten Öffnung (20), zwischen der ersten (19) und der dritten Öffnung (21) sowie zwischen der ersten (19), der zweiten (20) und der dritten Öffnung (21) hergestellt werden kann,
**dadurch gekennzeichnet, dass** die Mischkartusche (2) im Aufnahmeraum (28) mittels ein oder mehrerer Fixierelemente (10)
durch Wechselwirkung mit ein oder mehreren erste Fixierstellen (11) in einer ersten Stellung (N) so fixiert werden kann, dass die erste Öffnung (19) nur über dem ersten Loch (13), die zweite Öffnung (20) nur über dem dritten Loch (17) und die dritte Öffnung (21) nur über dem zweiten Loch (15) liegt,
und
durch Wechselwirkung mit ein oder mehreren zweiten Fixierstellen (12) in einer zweiten Stellung (H) so fixiert werden kann, dass die erste Öffnung (19) nur über dem dritten Loch (17), die zweite Öffnung (20) nur über dem zweiten Loch (15) und die dritte Öffnung (21) nur über dem ersten Loch (13) liegt.

2. Wasserhahn nach Anspruch 1, wobei der Wasserhahn mit einer in der ersten Stellung (N) fixierten Mischkartusche (2) für den Einsatz als Niederdruckarmatur geeignet ist, wobei insbesondere der erste Anschluss (14) mit einer Kaltwasserzufuhr verbunden wird, der zweite Anschluss (16) mit dem Kaltwassereingang einer Niederdruckheizung verbunden wird und der dritte Anschluss (18) mit dem Heißwasserausgang einer Niederdruckheizung verbunden wird,
und
wobei der Wasserhahn mit einer in der zweiten Stellung (H) fixierten Mischkartusche (2) für den Einsatz als Hochdruckarmatur geeignet ist, wenn der dritte Anschluss (18) verschlossen wird, bevorzugt mit einem Stopfen (6), wobei insbesondere der erste Anschluss (14) mit einer Kaltwasserzufuhr verbunden wird und der zweite Anschluss (16) mit einem Heißwasseranschluss verbunden wird.

3. Wasserhahn nach einem der Ansprüche 1 oder 2,
wobei der erste (14) und/oder zweite (16) und/oder dritte Anschluss (18), bevorzugt alle Anschlüsse, mit Schraubgewinden versehen sind,
und/oder
wobei an dem dritten Anschluss (18) und/oder in dem mit dem dritten Anschluss (18) verbundenen Schlauch ein Rückschlagventil (27) angeordnet ist, welches zur Verbindung des dritten Kanals mit einer Wasserleitung geeignet ist und einen Flüssigkeitsaustritt in die Wasserleitung aus Richtung des Aufnahmeraums (28) verhindert, wobei das Rückschlagventil bevorzugt ein Gewinde zwischen 1/8 Zoll und 1/2 Zoll (d.h. zwischen 3,175 mm und 12,7 mm) und besonders bevorzugt von 3/8 Zoll (d.h. 9,525 mm) besitzt.

4. Wasserhahn nach einem der Ansprüche 1 bis 3, wobei die Mischkartusche (2) ein oder mehrere Positionsmarkierungen aufweist, die bei Fixierung der Mischkartusche (2) im Aufnahmeraum (28) anzeigen, ob die erste (N) oder die zweite Stellung (H) eingestellt ist.

5. Wasserhahn nach Anspruch 4, wobei der Aufnahmeraum (28) in der Wand des Batteriekörpers (1) eine Ausnehmung (23) aufweist, durch die zumindest eine Positionsmarkierung der Mischkartusche (2) von der Außenseite des Batteriekörpers (1) zu erkennen ist, insbesondere beim Betrieb des Wasserhahns, wobei die Ausnehmung (23) bevorzugt kreisförmig ist und bevorzugt einen Durchmesser von 8 bis 15 mm aufweist, ganz besonders bevorzugt von 9 bis 12 mm, und/oder wobei der Mittelpunkt der Ausnehmung (23) 8 bis 25 mm, bevorzugt 10 bis 15 mm über dem Boden des Aufnahmeraums (28) liegt,
wobei die Ausnehmung (23) besonders bevorzugt mit einer durchsichtigen Scheibe, bevorzugt aus Glas oder Kunststoff, verschlossen ist, wobei die Scheibe bevorzugt als Vergrößerungsglas wirkt.

6. Wasserhahn nach einem der Ansprüche 1 bis 5, wobei zwei Fixierelemente (10) durch Vorsprünge an der Mischkartusche (2) gebildet werden und wobei zwei erste Fixierstellen (11) durch erste Vertiefungen im Boden des Aufnahmebereichs (28) gebildet werden und wobei zwei zweite Fixierstellen (12) durch zusätzliche zweite Vertiefungen im Boden des Aufnahmebereichs (28) gebildet werden.

7. Wasserhahn nach einem der Ansprüche 1 bis 6, wobei die Position der Mittelpunkte der Löcher (13, 15, 17) im Boden des Aufnahmebereichs (28) in der Draufsicht durch ein Koordinatensystem beschrieben werden kann, dessen gleichlange, normierte Z- und Y-Achse parallel zur Oberfläche des Bodens verlaufen und sich jeweils zwischen -1 und +1 erstrecken,
wobei der Mittelpunkt des ersten Loches (13) bei y=+0,25 bis y=+0,4 und z=-0,01 bis z=-0,1, bevorzugt bei y=+0,3 bis y=+0,35 und z=-0,015 bis z=-0,05, ganz besonders bevorzugt bei y=+0,333 und z=-0,023 liegt, und
wobei der Mittelpunkt des zweiten Loches (15) bei y=-0,15 bis y=-0,3 und z=-0,27 bis z=-0,43, bevorzugt bei y=-0,18 bis y=-0,23 und z=-0,32 bis z=-0,36, ganz besonders bevorzugt bei y=-0,201 und z=-0,341 liegt, und
und wobei der Mittelpunkt des dritten Loches (17) bei y=-0,10 bis y=-0,25 und z=0,2 bis z=0,35, bevorzugt bei y=-0,16 bis y=-0,22 und z=0,25 bis z=0,3, ganz besonders bevorzugt bei y=-0,193 und z=+0,279 liegt
und/oder
wobei der Durchmesser der Löcher (13, 15, 17) 10 bis 30 %, bevorzugt 15 bis 25 %, ganz besonders bevorzugt 19 bis 21% des Durchmessers der Mischkartusche (2) an der vom Stellhebel abgekehrten Stirnseite beträgt.

8. Wasserhahn nach einem der Ansprüche 1 bis 7, wobei die Position der Mittelpunkte der Löcher (13, 15, 17) im Boden des Aufnahmebereichs (28) in der Draufsicht durch ein Koordinatensystem beschrieben werden kann, dessen gleichlange Z- und Y-Achse parallel zur Oberfläche des Bodens verlaufen und sich jeweils zwischen -21,5 mm und +21,5 mm erstrecken, wobei der Mittelpunkt des ersten Loches (13) bei y=+7,15 mm und z=-0,50 mm liegt, und wobei der Mittelpunkt des zweiten Loches (15) bei y=-4,33 mm und z=-7,33 mm liegt, und wobei der Mittelpunkt des dritten Loches (17) bei y=-4,15 mm und z=+6,00 mm liegt,
und/oder
wobei der Durchmesser der Löcher (13, 15, 17) 8 mm beträgt.

9. Wasserhahn nach einem der Ansprüche 1 bis 8, wobei die ersten und zweiten Fixierstellen (11, 12) durch Vertiefungen gebildet werden,
und
wobei die Position der Mittelpunkte der ersten und zweiten Fixierstellen (11, 12) im Boden des Aufnahmebereichs (28) in der Draufsicht durch ein Koordinatensystem beschrieben werden kann, dessen gleichlange, normierte Z- und Y-Achse parallel zur Oberfläche des Bodens verlaufen und sich jeweils zwischen -1 und +1 erstrecken,
wobei die Mittelpunkte der zwei ersten Fixierstellen (11)
bei y=0,4 bis y=0,5 und z=0,38 bis z=0,48, bevorzugt bei y=0,457 und z=0,426, sowie
bei y=0,4 bis y=0,5 und z=-0,37 bis z=-0,47, bevorzugt bei y=0,4442 und z=-0,419 liegen,
und wobei die Mittelpunkte der zwei zweiten Fixierstellen (12)
bei y=0,09 bis y=0,19 und z=0,55 bis z=0,65, bevorzugt bei y=0,140 und z=0,605, sowie
bei y=-0,55 bis y=-0,65 und z=0,16 bis z=0,26, bevorzugt bei y=-0,589 und z=0,217 liegen.
und/oder
wobei der Durchmesser der Fixierstellen (11, 12) 6 bis 16 %, bevorzugt 7 bis 13 %, ganz besonders bevorzugt 8 bis 11 % des Durchmessers der Mischkartusche (2) an der vom Stellhebel abgekehrten Stirnseite beträgt,
und/oder
wobei die Tiefe der Fixierstellen (11, 12) 5 bis 15 %, bevorzugt 6 bis 12 %, ganz besonders bevorzugt 7 bis 9 % des Durchmessers der Mischkartusche (2) an der vom Stellhebel abgekehrten Stirnseite beträgt.

10. Wasserhahn nach Anspruch 9, wobei die Position der Mittelpunkte der ersten und zweiten Vertiefungen im Boden des Aufnahmebereichs in der Draufsicht durch ein Koordinatensystem beschrieben werden kann, dessen gleichlange Z- und Y-Achse parallel zur Oberfläche des Bodens verlaufen und sich jeweils zwischen -21,5 mm und +21,5 mm erstrecken, wobei die Mittelpunkte der zwei ersten Vertiefungen bei y=9,83 mm und z=9,16 mm sowie bei y=9,5 mm und z=-9 mm liegen, und wobei die Mittelpunkte der zwei zweiten Vertiefungen bei y=3 mm und z=13 mm, sowie bei y=-12,66 mm und z=4,66 mm liegen,
und/oder
wobei der Durchmesser der Fixierstellen (11, 12) 4,15 mm beträgt,
und/oder
wobei die Tiefe der Fixierstellen (11, 12) 3,5 mm beträgt.
